(19) Europäisches Patentamt
European Patent Office
Office européen des brevets

(11) EP 3 904 094 A1

(12) **EUROPEAN PATENT APPLICATION**
published in accordance with Art. 153(4) EPC

(43) Date of publication:
**03.11.2021 Bulletin 2021/44**

(21) Application number: **19902982.8**

(22) Date of filing: **25.12.2019**

(51) Int Cl.:
***B32B 27/34*** *(2006.01)*

(86) International application number:
**PCT/JP2019/050780**

(87) International publication number:
**WO 2020/138149 (02.07.2020 Gazette 2020/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.12.2018 JP 2018246320**

(71) Applicant: **Unitika Ltd.**
**Amagasaki-shi, Hyogo 660-0824 (JP)**

(72) Inventors:
- **LI Guangzhu**
  **Uji-shi, Kyoto 611-0021 (JP)**
- **OGINO Toshihiro**
  **Tokyo 103-8321 (JP)**
- **NODA Atsuko**
  **Uji-shi, Kyoto 611-0021 (JP)**

(74) Representative: **Vigand, Philippe et al**
**Novagraaf International SA**
**Chemin de l'Echo 3**
**1213 Onex - Genève (CH)**

(54) **LAMINATE**

(57) A laminate including one or more layers of a layer consisting of a polyimide resin and a layer consisting of a polyamide resin, respectively, in which a puncture strength is 0.60 N/μm or more, and a retention rate of edge tear resistance measured at a bent portion after a bend test is 70% or more.

EP 3 904 094 A1

## Description

### Technical Field

The present invention relates to a laminate with good puncture resistance and bending resistance.

### Background Art

In recent years, flat displays have been used in many fields and places, and the importance has been increasing with the progress of informatization.

Currently, the representative flat display is a liquid crystal display (LCD), but vigorous developments on organic EL, inorganic EL, plasma display panel (PDP), light emitting diode display (LED), vacuum fluorescent display (VFD), field emission display (FED) have also been going on as flat displays based on different display principles from LCD.

All these new flat displays are so-called self-luminous type and significantly different from LCD in the following aspect, with good features LCD lacks.

In other words, LCD is called a light receiving type. Liquid crystal does not emit light by itself, acts as a so-called shutter that allows light from outside to penetrate or blocks the light and constitutes a display. For this reason, LCD requires a light source and generally needs a backlight.

In contrast, a device of self-luminous type emits own light and thus eliminates the need for a separate light source. Consequently, flat displays of self-luminous type decreased the number of components and thus enabled to be thinner.

Organic light emitting diode (OLED) displays utilizing organic EL have been particularly adopted for television sets, mobile data terminals and the like. From the viewpoint of weight reduction as the thickness is decreased, various plastic substrates have been replacing conventional glass substrates (for example, Patent Literature 1). Glass substrates unfortunately posed a problem of splits, but the replacement to plastic substrates eliminated the splits and further enabled the development of flat displays with flexibility. Such a flexible display technology has an outlook to advance from curved, a form simply curved; to bendable, a form that can be bent; to foldable, a form that can be folded; and, in a future, to rollable, a form that can be wound around. The foldable displays, that can be folded, are evaluated for bending resistance by repeated bend tests or the like but may break in use due to the deteriorated strength at a bent portion despite being free from splits and cracks by the repeated bending.

### Citation List

#### Patent Literature

Patent Literature 1: Japanese Translation of PCT International Application Publication No. 2019-508280

### Summary of Invention

#### Technical Problem

The display film disclosed in Patent Literature 1 is obtained by using, for example, a polyimide film or a polyester film as a transparent polymer base material or the like and forming a transparent aliphatic crosslinked polyurethane layer and has the transparency and the bending resistance usable as a folding display. However, this display film was not quite bending resistant and thus required further improvement.

#### Solution to Problem

The present invention has an object to solve such problems and provide a laminate with good bending resistance and also puncture resistance.

The present inventors conducted extensive studies to solve such problems and found as a result that a laminate including one or more layers of a layer consisting of a polyimide resin and a layer consisting of a polyamide resin, respectively, can solve these problems, whereby the present invention was accomplished.

In other words, the scope of the present invention is as follows.

(1) A laminate including one or more layers of a layer consisting of a polyimide resin and a layer consisting of a polyamide resin, respectively, wherein

a puncture strength is 0.60 N/μm or more, and
a retention rate of edge tear resistance measured at a bent portion after a bend test is 70% or more,
wherein the <bend test> is in accordance with JIS K5600-5-1, in which 180°-bending is repeated 600,000 times using a 10 mm-diameter cylindrical mandrel under environment of 20°C × 65% RH.

(2) The laminate according to (1), wherein an impact strength is 2.0 J or more.
(3) The laminate according to (1) or (2), wherein the polyamide resin is a semi-aromatic polyamide resin.
(4) The laminate according to any one of (1) to (3), wherein a haze value measured in accordance with JIS K7105 is 8% or less.
(5) An image display using the laminate according to any one of (1) to (4).

Advantageous Effects of the Invention

The laminate of the present invention has good bending resistance, sufficiently enhanced durability against repeated folding and also good puncture resistance. Accordingly, such a laminate can be preferably used as an optical substrate such as an OLED, an electronic substrate material such as an LED-mounted substrate, a flexible printed wiring board, a flexible flat cable, a cover lay film for a flexible printed wiring board and the like.

Description of Embodiments

Hereinafter, the present invention will be described in detail.
The laminate of the present invention includes one or more layers of a layer consisting of a polyimide resin and a layer consisting of a polyamide resin, respectively.
The polyimide resins, particularly transparent polyimide resins, have both transparency and heat resistance and hence can be preferably used as an optical substrate material. However, the polyimide resins are not sufficiently suitable against impact resistance and bending resistance due to the rigid polyimide structure. On the other hand, the polyamide resins have good impact resistance and bending resistance in addition to the practical heat resistance and transparency.
In the laminate of the present invention, a layer consisting of a polyimide resin and a layer consisting of a polyamide resin can be directly laminated, or any layers can be laminated between the layer consisting of a polyimide resin and the layer consisting of a polyamide resin.

<Polyimide resin>

The polyimide resin constituting the laminate of the present invention is not particularly limited and a known resin can be used. Polyimide is a resin having the imide structure and is a polymer including an imide bond in a repeating unit. In the present invention, polyimide is preferably formed from diamine or a derivative thereof and an acid anhydride or a derivative thereof.
Specifically, the polyimide resin is preferably polyimide having the repeating unit represented by the following formula (1). In the following formula (1), the moiety including $(-C(=O))_2-R-(C(=O)-)_2$ is derived from an acid anhydride or a derivative thereof, and the moiety including =N-A-N= is derived from diamine or a derivative thereof.

[Formula 1]

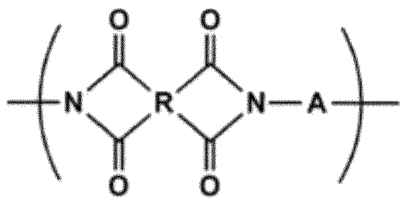 (1)

In the formula (1), R represents a quadrivalent group derived from an aromatic hydrocarbon ring, a heteroaromatic ring, an aliphatic hydrocarbon or an alicyclic hydrocarbon having 4 to 39 carbon atoms, or a quadrivalent group consisting of combinations thereof. A represents a divalent group derived from a divalent aliphatic hydrocarbon, an alicyclic hydrocarbon or an aromatic hydrocarbon having 1 to 39 carbon atoms, or a divalent group consisting of combinations thereof.
The synthesis method of the polyimide having the repeating unit represented by the formula (1) is not particularly

limited and a known method is applicable. For example, aromatic, aliphatic or alicyclic tetracarboxylic acid or a derivative thereof and diamine or a derivative thereof are reacted to synthesize polyamic acid, followed by imidizing the polyamic acid thereby to synthesize polyimide.

Examples of the aromatic tetracarboxylic acid and derivatives thereof include 4,4'-biphthalic anhydride, 4,4'-(hexafluoroisopropylidene)diphthalic anhydride, 2,3,3',4'-biphenyl tetracarboxylic dianhydride, 4,4'- oxydiphthalic anhydride, 3,3',4,4'-benzophenonetetracarboxylic dianhydride, 4-(2,5-dioxotetrahydrofuran-3-yl)-1,2,3,4-tetrahydronaphthalene-1,2-dicarboxylic anhydride, 3,3',4,4'-diphenylsulfonetetracarboxylic dianhydride, 3,4'- oxydiphthalic anhydride, 3,4,9,10-perylenetetracarboxylic dianhydride (pigment red 224), 2,3,6,7-naphthalenetetracarboxylic dianhydride, 2,2-bis(4-(3,4-dicarboxyphenoxy)phenyl)propane dianhydride, 9,9-bis(3,4-dicarboxyphenyl)fluorene, and 9,9-bis[4-(3,4-dicarboxyphenoxy)-phenyl]fluorene anhydride.

Examples of the aliphatic tetracarboxylic acid include 1,2,3,4-butanetetracarboxylic acid.

Examples of the alicyclic tetracarboxylic acid include 1,2,3,4-cyclobutanetetracarboxylic acid, 1,2,4,5-cyclopentanetetracarboxylic acid, 1,2,4,5-cyclohexanetetracarboxylic acid, bicyclo[2.2.2]oct-7-ene-2,3,5,6-tetracarboxylic acid, and bicyclo[2.2.2]octane-2,3,5,6-tetracarboxylic acid.

Examples of the derivatives of aliphatic or alicyclic tetracarboxylic acid include aliphatic or alicyclic tetracarboxylic acid esters, aliphatic or alicyclic tetracarboxylic dianhydrides.

Of the aliphatic or alicyclic tetracarboxylic acids, or derivatives thereof, alicyclic tetracarboxylic dianhydrides are preferable.

Examples of the diamine include aliphatic diamines, aromatic diamines, and mixtures thereof. The "aromatic diamine" in the present invention represents diamines with an amino group directly bonded to an aromatic ring and can include an aliphatic group or other substituents in a part of the structure thereof. The aromatic ring can be a monocycle or condensed rings. Examples of the aromatic ring include, but not limited thereto, benzene ring, naphthalene ring, anthracene ring, and fluorene ring, with benzene ring being preferable. In the present invention, the "aliphatic diamine" represents diamines with an amino group directly bonded to an aliphatic group and can include an aromatic ring or other substituents in a part of the structure thereof.

Examples of the aliphatic diamine include acyclic aliphatic diamines such as hexamethylenediamine and cyclic aliphatic diamines such as 1,3-bis(aminomethyl)cyclohexane, 1,4-bis(aminomethyl)cyclohexane, norbornane diamine, and 4,4'-diaminodicyclohexylmethane. These aliphatic diamines can be used singly, or 2 or more can be used in combination.

Examples of the aromatic diamine include aromatic diamines having one aromatic ring such as p-phenylenediamine, m-phenylenediamine, 2,4-diaminotoluene, m-xylylenediamine, p-xylylenediamine, and 1,5-diaminonaphthalene, as well as 2,6-diaminonaphthalene, and aromatic diamines having 2 or more aromatic rings such as 4,4'-diaminodiphenylmethane, 4,4'-diaminodiphenylpropane, 4,4'-diaminodiphenyl ether, 3,4'-diaminodiphenyl ether, 3,3'-diaminodiphenyl ether, 4,4'-diaminodiphenyl sulfone, 3,4'-diaminodiphenyl sulfone, 3,3'-diaminodiphenyl sulfone, 1,4-bis(4-aminophenoxy)benzene, 1,3-bis(4-aminophenoxy)benzene, 4,4'-diaminodiphenyl sulfone, bis[4-(4-aminophenoxy)phenyl]sulfone, bis[4-(3-aminophenoxy)phenyl]sulfone, 2,2-bis[4-(4-aminophenoxy)phenyl]propane, 2,2-bis[4-(3-aminophenoxy)phenyl]propane, 2,2'-dimethylbenzidine, 2,2'-bis(trifluoromethyl)-4,4'-diaminodiphenyl(2,2'- bis(trifluoromethyl)benzidine (TFMB)), 4,4'-bis(4-aminophenoxy)biphenyl, 4,4'-diaminodiphenyl ether, 3,4'-diaminodiphenyl ether, 4,4'-diaminodiphenylmethane, 9,9-bis(4-aminophenyl)fluorene, 9,9-bis(4-amino-3-methylphenyl)fluorene, 9,9- bis(4-amino-3-chlorophenyl)fluorene, and 9,9- bis(4-amino-3-fluorophenyl)fluorene, and derivatives thereof. These aromatic diamines can be used singly, or 2 or more can be used in combination.

The polyimide resin used in the laminate of the present invention is particularly preferably transparent when the laminate is used as an optical substrate such as an image display.

<Polyamide resin>

The polyamide resin constituting the laminate of the present invention is not particularly limited, and aromatic polyamide resins, alicyclic polyamide resins, and aliphatic polyamide resins can be used.

Of these, aromatic polyamide resins and alicyclic polyamide resins are preferable considering heat resistance and transparency. Of the aromatic polyamide reins, semi-aromatic polyamide resins are more preferable due to a good balance of heat resistance, transparency, impact resistance, and bending resistance, with a polycondensate of aromatic dicarboxylic acid and an aliphatic diamine being particularly preferable.

The dicarboxylic acid component constituting the semi-aromatic polyamide resin preferably includes terephthalic acid as the main component. The proportion of terephthalic acid in the dicarboxylic acid component is preferably 60 to 100 mol%, more preferably 70 to 100 mol%, and further preferably 85 to 100 mol%. A proportion of terephthalic acid of less than 60 mol% in the dicarboxylic acid component may deteriorate the heat resistance and low water absorbency of a film to be obtained.

Examples of dicarboxylic acid components other than the terephthalic acid constituting the semi-aromatic

polyamide resin included in the dicarboxylic acid component include aliphatic dicarboxylic acids such as oxalic acid, malonic acid, succinic acid, glutaric acid, adipic acid, sebacic acid, dodecanedioic acid, tetradecanedioic acid, and octadecanedioic acid; and aromatic dicarboxylic acids such as 1,4-naphthalenedicarboxylic acid, 1,3-naphthalenedicarboxylic acid, 1,2-naphthalenedicarboxylic acid, and isophthalic acid.

Examples of the diamine component constituting the semi-aromatic polyamide resin include linear aliphatic diamines such as 1,4-butanediamine, 1,5-pentanediamine, 1,6-hexanediamine, 1,7-heptanediamine, 1,8-octanediamine, 1,9-nonanediamine, 1,10-decanediamine, 1,11-undecanediamine, and 1,12-dodecanediamine; branched chain aliphatic diamines such as 2-methyl-1,8-octanediamine, 4-methyl-1,8-octaneamine, and 5-methyl-1,9-nonanediamine; alicyclic diamines such as isophoronediamine, norbornanedimethylamine, and tricyclodecane dimethylamine; and aromatic diamines such as phenylenediamine.

The diamine component of the semi-aromatic polyamide resin preferably includes an aliphatic diamine having 9 carbon atoms as the main component, and the proportion of the aliphatic diamine having 9 carbon atoms in the diamine component is preferably 60 to 100 mol%, more preferably 75 to 100 mol%, and further preferably 90 to 100 mol%. A proportion of the aliphatic diamine having 9 carbon atoms of less than 60 mol% may deteriorate the heat resistance, low water absorbency, and chemical resistance of a film to be obtained.

Examples of the aliphatic diamine having 9 carbon atoms include linear aliphatic diamines such as 1,9-nonanediamine; and branched chain aliphatic diamines such as 2-methyl-1,8-octanediamine, and 4-methyl-1,8-octanediamine. These can be used singly, or 2 or more can be used in combination. Of these, it is preferable that 1,9-nonanediamine and 2-methyl-1,8-octanediamine be used in combination, or 1,9-nonanediamine be used singly considering the formability. The copolymerization rate of 1,9-nonanediamine to 2-methyl-1,8-octanediamine (molar ratio, 1,9-nonanediamine/2-methyl-1,8-octanediamine) is preferably 50/50 to 100/0, more preferably 70/30 to 100/0, and further preferably 75/25 to 95/5. The semi-aromatic polyamide resin using 1,9-nonanediamine and 2-methyl-1,8-octanediamine in combination in such a ratio or using 1,9-nonanediamine singly can be a film with good heat resistance and low water absorbency.

The semi-aromatic polyamide resin can be copolymerized with a lactam such as ε-caprolactam, ζ-enantholactam, η-capryllactam, or ω-laurolactam within a range of not affecting the object of the present invention.

Specific examples of the semi-aromatic polyamide resin include polyamide 7T, polyamide 8T, polyamide 9T (glass transition temperature (Tg) 108°C), polyamide 10T (Tg 118°C), polyamide 10N, polyamide 11T, and polyamide 12T.

Examples of the alicyclic polyamide resin include homopolyamides and copolyamides having at least one constituent component selected from the alicyclic diamine components and the alicyclic dicarboxylic acid components. For example, the alicyclic polyamide obtained by using alicyclic diamine and/or alicyclic dicarboxylic acid as at least a part of the component of the diamine components and the dicarboxylic acid components is included. Particularly, for the diamine component and the dicarboxylic acid component, it is preferable to use the aliphatic diamine component and/or the aliphatic dicarboxylic acid component described earlier in combination with the alicyclic diamine component and/or the alicyclic dicarboxylic acid component. The thus obtained alicyclic polyamide resin has high transparency and is known as so-called transparent polyamide.

Examples of the alicyclic dicarboxylic acid constituting the alicyclic polyamide resin include cycloalkane dicarboxylic acids (C5-10 cycloalkanedicarboxylic acid and the like) such as 1,4-cyclohexanedicarboxylic acid and 1,3-cyclohexanedicarboxylic acid.

Examples of the alicyclic amine component constituting the alicyclic polyamide resin include diaminocycloalkanes (diamino C5-10 cycloalkane and the like) such as diaminocyclohexane; bis(aminocycloalkyl)alkane[bis(amino C5-8 cycloalkyl)C1-3 alkane and the like] such as bis(4-aminocyclohexyl)methane, bis(4-amino-3-methylcyclohexyl)methane, and 2,2-bis(4'-aminocyclohexyl)propane; and hydrogenated xylylenediamine.

Specific examples of the alicyclic polyamide resin include polyamide 6C.

The aliphatic polyamide resin is not particularly limited but examples include polymers of aminocarboxylic acid, a lactam, or diamine and dicarboxylic acid as the main raw materials and having an amide bond in the backbone. The aliphatic polyamide resin is a resin with no aromatic ring or aliphatic ring in a molecule.

Examples of the aminocarboxylic acid constituting the aliphatic polyamide resin include aliphatic aminocarboxylic acids such as 6-aminocaproic acid, 11-aminoundecanoic acid, and 12-aminododecanoic acid. Examples of the lactam constituting the aliphatic polyamide resin include ε-caprolactam, ω-undecanolactam, and ω-laurolactam.

Examples of the diamine constituting the aliphatic polyamide resin include aliphatic diamines such as tetramethylenediamine, hexamethylenediamine, decanediamine, undecamethylenediamine, and dodecamethylenediamine. Examples of the dicarboxylic acid capable of constituting the aliphatic polyamide resin include aliphatic dicarboxylic acids such as adipic acid, suberic acid, sebacic acid, and dodecanedioic acid. These diamines and dicarboxylic acids can also be used as a pair of salts.

Specific examples of the aliphatic polyamide resin include polyamide 6 (Tg 58°C), polyamide 66 (Tg 58°C), polyamide 11 (Tg 46°C), polyamide 12 (Tg 37°C), polyamide 610 (Tg 48°C), and polyamide 1010 (Tg 37°C).

Considering the heat resistance and durability for the use as an optical substrate such as OLED, the polyamide

resin preferably has a glass transition temperature of 80°C or more, more preferably 90°C or more, and further preferably 100°C or more. The layer consisting of the polyamide resin having a glass transition temperature of 80°C or more can withstand a working temperature when manufacturing the laminate and when manufacturing an image display by laying up the laminate and can further withstand the thermal expansion and deformation caused by heat generation of the image display.

Semi-aromatic polyamides such as polyamide 9T (Tg 108°C) and polyamide 10T (Tg 118°C) are particularly preferable as the polyamide resin having a glass transition temperature of 80°C or more due to both heat resistance and transparency.

<Other resins>

The laminate of the present invention can include a layer consisting of the following resins other than the polyimide resins and the polyamide resins. Examples of the resins other than the polyimide resins and the polyamide resins include polyester resins such as polyethylene terephthalate and polyethylene naphthalate; polyphenylene sulfide resins; polyethersulfone resins; polyetherimide resins; polycarbonate resins; and cyclic olefin resins such as cyclic olefin homopolymers and cyclic olefin copolymers.

Of these, considering the transparency and a melting temperature (Tm) of 220°C or more or a glass transition temperature (Tg) of 200°C or more, resins such as polyethylene terephthalate resins (Tg 85°C, Tm 266°C), polyetherimide resins (Tg 234°C, Tm 275°C), polyphenylene sulfide resins (Tg 223°C, Tm 280°C), polyethersulfone resins (Tg 225°C), and polyethylene naphthalate resins (Tg 155°C, Tm 270°C) are preferably used. These can be used singly, or 2 or more can be used in combination.

<Laminate>

The laminate of the present invention includes one or more layers of the layer consisting of a polyimide resin and the layer consisting of a polyamide resin, respectively. Particularly, the inclusion of the layer consisting of a polyamide resin enables the laminate to be easily formed, easily shape-processed such as hinges and steps at a bent portion by heating and applying pressure, and additionally have increased durability against bending.

The layer consisting of a polyimide resin and the layer consisting of a polyamide resin constituting the laminate preferably have a thickness of 1 to 100 μm, more preferably 2 to 75 μm, and further preferably 5 to 50 μm, respectively. A thickness of each layer of less than 1 μm may cause the laminate to have an insufficient puncture strength, whereas a thickness of each layer of more than 100 μm may cause the laminate to have deteriorated durability against bending.

The layer constitution of the layer consisting of a polyimide resin (layer I) and the layer consisting of a polyamide resin (layer II) in the laminate is preferably layer II/layer I/Layer II in addition to layer I/layer II. Layers such as an adhesive layer can be laminated between layer I and layer II.

The laminate of the present invention needs to have a puncture strength of 0.6 N/μm or more, preferably 0.65 N/μm or more, and further preferably 0.7 N/μm or more. A puncture strength of 0.6 N/μm or more reduces the concerns of damages from a dropping and a hitting by an object when the laminate is used for an image display.

The laminate of the present invention has good bending resistance. A laminate subjected to the bend test, in which 180°-bending is repeated 600,000 times using a 10 mm-diameter cylindrical mandrel under environment of 20°C × 65% RH in accordance with JIS K5600-5-1, needs to retain edge tear resistance of 70% or more at a bent portion.

The bent portion, at which 180°-bending is similarly repeated 600,000 times using a 3 mm-diameter cylindrical mandrel, also preferably has a retention rate of edge tear resistance of 70% or more, and the bent portion, at which 180°-bending is similarly repeated 600,000 times using a 2 mm-diameter cylindrical mandrel, also more preferably has a retention rate of edge tear resistance of 70% or more.

The bent portion of the laminate having a retention rate of edge tear resistance of 70% or more after the bend test is free from visible splits and cracks and has a tensile strength more than the practical level even when invisible microscopic cracks are caused. That is, the bent portion of the laminate has reduced likelihood of breaking in use. The retention rate of edge tear resistance at a bent portion is preferably 75% or more, and more preferably 80% or more.

The laminate of the present invention has an impact strength of preferably 2.0 J or more, more preferably 2.3 J or more, and further preferably 2.5 J or more. The laminate having such an impact resistance can demonstrate effects synergistically with the bending resistance, and the laminate used for an image display has reduced concerns of damages from a dropping and a hitting by an object.

The laminate of the present invention preferably has transparency and preferably has a haze value measured in accordance with JIS K7105 of 8% or less, more preferably 7% or less, and further preferably 6% or less.

<Production of laminate>

The laminate of the present invention can be produced by laminating the layer consisting of a polyimide resin and the layer consisting of a polyamide resin. For example, a method of laminating each of the resin films using an adhesive and the like can be used, one of the resins can be melt-extruded and laminated on the other layer consisting of a resin, or a solution of one of the resins dissolved in a solvent can be applied to the other layer consisting of a resin, dried to form a resin layer and laminated.

(Production of the polyamide resin)

The production of the polyamide resin for constituting the layer consisting of a polyamide resin is first described.

The polyamide resin used in the present invention can be produced by a known method. Hereinafter, the production method of the semi-aromatic polyamide resin is described.

The semi-aromatic polyamide resin can be produced by any method known as a method of producing a crystalline polyamide resin. Examples include a solution polymerization method or an interfacial polymerization method with acid chloride and a diamine component as raw materials, or a method of manufacturing a prepolymer using a dicarboxylic acid component and a diamine component as raw materials and increasing the molecular weight of the prepolymer by melt polymerization or solid phase polymerization.

The prepolymer can be obtained by, for example, heatpolymerizing a nylon salt, which is prepared by mixing a diamine component, a dicarboxylic acid component and a polymerization catalyst all at once, at 200 to 250°C.

The limiting viscosity of the prepolymer is preferably 0.1 to 0.6 dl/g. A limiting viscosity of the prepolymer within this range has a benefit of obviating a loss of mole balance between the carboxyl group in the dicarboxylic acid component and the amino group in the diamine component and accelerating a polymerization rate in the subsequent solid phase polymerization and melt polymerization. A limiting viscosity of the prepolymer of less than 0.1 dl/g may extend a polymerization time and cause low productivity. On the other hand, a limiting viscosity of more than 0.6 dl/g may color a semi-aromatic polyamide resin to be obtained.

The solid phase polymerization of the prepolymer is preferably carried out under reduced pressure or in an inert gas stream. The temperature of solid phase polymerization is preferably 200 to 280°C. A temperature of solid phase polymerization within this range can prevent a semi-aromatic polyamide resin to be obtained from coloring and gelatinizing. A temperature of solid phase polymerization of less than 200°C may extend a polymerization time and cause low productivity. On the other hand, a temperature of solid phase polymerization of more than 280°C may color and gelatinize a semi-aromatic polyamide resin to be obtained.

The melt polymerization of the prepolymer is preferably carried out at a temperature of 350°C or less. A polymerization temperature of more than 350°C may facilitate the decomposition and thermal deterioration of a semi-aromatic polyamide resin. For this reason, the film obtained from such a semi-aromatic polyamide resin may have poor strength and appearance. The melt polymerization includes melt polymerization with the use of a melt-extruder.

A polymerization catalyst is used for the polymerization of the semi-aromatic polyamide resin. The polymerization catalyst is preferably a phosphorus catalyst, considering the reaction speed and economic performance. Examples of the phosphorus catalyst include hypophosphoric acid, phosphorous acid, phosphoric acid, salts thereof (for example, sodium hypophosphite) and esters thereof [for example, 2,2-methylenebis(di-t-butylphenyl)octylphosphite]. These can be used singly, or 2 or more can be used in combination.

Of these, phosphorous acid is more preferably used as the polymerization catalyst. The semi-aromatic polyamide resin polymerized using phosphorous acid can prevent an increase of filtration pressure when filtering using a filter for a film formation in comparison with the resin polymerized using other polymerization catalysts (for example, hypophosphoric acid). The effects achieved by preventing the increase of filtration pressure will be described later.

The semi-aromatic polyamide resin polymerized using phosphorous acid is prevented from being gelatinized, and the film to be obtained has the occurrence of fisheyes prevented.

The content of the polymerization catalyst in the obtained semi-aromatic polyamide resin to the total amount of dicarboxylic acid component and diamine component is preferably 0.01 to 5 mass%, more preferably 0.05 to 2 mass%, and further preferably 0.07 to 1 mass%. A content of the polymerization catalyst within this range can prevent the deterioration of the semi-aromatic polyamide resin, while efficiently polymerizing the semi-aromatic polyamide resin. A content of the polymerization catalyst of less than 0.01 mass% may fail to express the catalysis. On the other hand, a content of more than 5 mass% may be economically disadvantageous.

In the production of the polyamide resin, a terminal blocking agent can be used. The terminal blocking agent is not particularly limited as long as it is a monofunctional compound having the reactivity to the amino group or the carboxyl group at the terminal of the polyamide resin. Examples of the terminal blocking agent include monocarboxylic acids, monoamines, acid anhydrides, monoisocyanates, monoacid halides, monoesters, and monoalcohols.

Of these, monocarboxylic acids or monoamines are preferable considering the reactivity and the stability of the

blocked terminal groups. Further, monocarboxylic acids are more preferable considering the easy handleability. Examples of the monocarboxylic acid include acetic acid, propionic acid, butyric acid, valeric acid, caproic acid, caprylic acid, lauric acid, tridecylic acid, myristic acid, palmitic acid, stearic acid, and benzoic acid.

An amount of the terminal blocking agent to be used can be suitably selected according to the reactivity and boiling point of a terminal blocking agent to be used, reactor, and reaction conditions. The amount of the terminal blocking agent to be used is preferably 0.1 to 15 mol% with respect to the total number of moles of the dicarboxylic acid component and the diamine component, or with respect to the total number of moles of the dicarboxylic acid component and the diol component, considering the adjustment of the molecular weight and the suppression of the resin decomposition.

The polyamide resin used in the present invention preferably has the terminal groups of molecular chain blocked by such a terminal blocking agent. The proportion of the amount of the terminal groups terminally blocked with respect to the total amount of the terminal groups is preferably 10 mol% or more, more preferably 40 mol% or more, and further preferably 70 mol% or more. The proportion of the amount of the terminal groups terminally blocked of 10 mol% or more can prevent the resin decomposition during melt-molding and a molecular weight increase caused as the resin condensation proceeds. Additionally, the occurrence of voids caused by the resin decomposition is prevented and thus the film obtained from the polyamide resin is provided with a good appearance.

(Production of the layer consisting of the polyamide resin)

Subsequently, the production of a polyamide resin film is described as the production of the layer consisting of a polyamide resin.

In the present invention, it is preferable that the polyamide resin is melted to obtain a molten polymer, and the molten polymer is passed through a sintered metallic filter having an absolute filtration diameter of 60 μm or less, followed by molding into a film shape.

More specifically, the production method is as follows. In other words, the polyamide resin and a heat stabilizer and various additives as needed are melt-kneaded in an extruder to obtain a molten polymer. The molten polymer is filtered through a filter and the filtered molten polymer is extruded into a film shape using a flat die such as a T-die. Subsequently, the film-shaped molten product is cooled by being allowed to contact with the cooling surface of a running cooler such as a cooling roll or a steel belt thereby to obtain a polyamide resin film. This polyamide resin film is a substantially unoriented and unstretched film.

The temperature of a running cooler used for the film formation is preferably 20 to 90°C, more preferably 45 to 70°C, and further preferably 45 to 60°C. When a preset temperature of a running cooler is more than 90°C, the obtained film may be difficult to be peeled off from the running cooler. When a temperature of the running cooler is less than 20°C, uneven cooling is likely to occur when the film-shaped molten product contacts with the running cooler thereby causing a film to be obtained likely to lose flatness.

Subsequently, the obtained unstretched film is preheated and then stretched.

The preheating temperature is preferably (Tg-20°C) to (Tg+40°C), and more preferably (Tg-15°C) to (Tg+35°C). A preheating temperature within this range does not cause uneven stretch or film breakage, thus enabling stable stretching. When a preheating temperature is less than (Tg-20°C), the film cannot be deformed during stretching and may break, whereas when a preheating temperature is more than (Tg+40°C), the film may be crystallized before stretching and break during stretching and uneven stretch may occur.

The preheating time of the film before stretching is not particularly limited and the realistic range is 1 to 60 seconds.

Examples of the method of stretching the film include the flat sequential biaxial stretching method, the flat simultaneous biaxial stretching method, and the tubular method. Of these, the flat simultaneous biaxial stretching method is preferably employed considering imparting good film thickness accuracy and uniform physical properties of the film width direction.

The stretching machines usable to employ the flat simultaneous biaxial stretching method include screw tenters, pantograph tenters, and linear motor-driven clip tenters.

The stretching temperature of the film is preferably Tg or more and preferably more than Tg and (Tg+50°C) or less. A stretching temperature within this range does not cause uneven stretch or film breakage, thus enabling stable stretching. A stretching temperature of less than Tg may break the film. On the other hand, a stretching temperature of more than (Tg+50°C) may facilitate the crystallization before stretching and cause uneven stretch.

After stretched, it is preferable to thermally fix the film while holding with the clips for stretching. The thermal fixation treatment can enhance the dimensional stability of the film to be obtained at a high temperature.

The thermal fixation temperature is preferably 200°C to (Tm-5°C), and more preferably 240°C to (Tm-10°C), considering the heat resistance and the dimensional stability of the film.

Further, after the thermal fixation treatment, it is preferable to carry out 1 to 10% relaxation treatment, and more preferably 3 to 7% relaxation treatment, while holding the film with clips. The relaxation treatment, when performed, can

further enhance the dimensional stability of the film to be obtained at a high temperature.

The obtained polyamide resin film can be a cut-sheet or in the form of a film roll by being wound around a wind-up roll. It is preferable to be the form of a film roll considering the productivity for uses of various purposes. The film, when formed into a film roll, can be slit to a desired width.

The polyamide resin film produced by the method, when subjected to 600,000 times of 180°-repeated bending using a 10 mm-diameter cylindrical mandrel under environment of 20°C × 65% RH, hardly has occurrence of splits, whitening at a bent portion, and leaves bending marks, and further has a small drop in an edge tear resistance value after the bend test. The laminate including such a polyamide resin film has good bending resistance, a reduced drop of an edge tear resistance value after the bend test, and can be durable against a long-term use as an optical substrate and a base material film and a cover lay film of FPC in foldable image displays.

In the present invention, the polyamide resin film preferably has impact resistance. The polyamide resin film having impact resistance can enhance durability withstandable against the breakage caused when a force more than necessary is applied to an image display and the damage from a dropping. The polyamide resin film preferably has an impact resistance strength of 0.7 J or more, more preferably 1.2 J or more, and further preferably 1.5 J or more. The polyamide resin film having such an impact resistance demonstrates effects synergistically with the bending resistance, and the laminate has practical durability performance for an image display use.

For the obtention of the bending resistance and the impact resistance, the polyamide resin film is preferably stretched in at least one direction, and further preferably stretched in biaxial directions.

The unstretched film tends to have poor toughness, and the film, when stretched, can enhance the bending resistance, impact resistance, low-water absorbency, chemical resistance, heat resistance, and dynamic property.

The polyamide resin film preferably has a thickness of 25 μm or more, more preferably 25 to 100 μm, and further preferably 50 to 75 μm.

When the polyamide resin film in the present invention has such properties, the laminate used in an image display has durability. Particularly, in thin image displays such as organic EL, image displays can be free from splits when deformed in various ways such as curved, bent, and folded.

The polyamide resin film preferably has a haze value measured in accordance with JIS K7105 of 3% or less, more preferably 2% or less, and further preferably 1% or less, at a thickness of 25 to 100 μm. The polyamide resin film having a haze value of more than 3% has low transparency and reduces light from a light source thereby likely being difficult to adopt the laminate to be obtained in a display. Thus, the lower the haze value, the better, but a haze value of 1% or less can satisfy most requirements for the display use.

For achieving a haze value within this range, for example, approaches such as adjusting a particle size and a content of additives or adjusting heat treatment conditions are employed, and particularly an approach of applying a coating agent containing particles to the film is preferable. This approach can arrange the particles in an extremely thin application layer on the film surface and thus easily achieves a low haze value with a smaller addition amount than when particles are contained in the film, and the slip property required for the web handling such as winding-up can also be secured.

[Particle]

Examples of the particle include inorganic particles such as silica, alumina, titanium dioxide, calcium carbonate, kaolin, and barium sulfate; and organic fine particles such as acrylic resin particles, melamine resin particles, silicone resin particles, and crosslinked polystyrene particles.

The average particle size of the particles can be suitably selected in accordance with required properties such as friction property and optical property but is preferably 0.01 to 10 μm, and more preferably 0.05 to 6 μm, considering the optical property and smoothness. An average particle size larger than 10 μm may affect, in addition to easy particle fall off, the sharpness of picture when used for the display as such a size is visually recognizable. On the other hand, an average particle size of smaller than 0.01 μm fails to secure the slip property required for the web handling and also tends to form coarse particles by reaggregation, hence not preferable.

On the other hand, a predetermined slip property secured by containing particles such as silica enhances the web handling and is helpful to prevent scratches on the film surface caused by rubbing between the films when winding up and winding out the polyamide resin film or rubbing against a processed roll. Thus, the bare minimum silica and the like contained within the range of not affecting a haze value increase of the film has a prevention effect on the haze value increase caused by scratches.

[Heat stabilizer]

The polyamide resin film preferably contains a heat stabilizer to enhance heat stability during the film formation, prevent the deterioration of film strength and elongation and prevent the film deterioration caused by oxidation and

decomposition in use. Examples of the heat stabilizer include hindered phenol heat stabilizers, hindered amine heat stabilizers, phosphorus heat stabilizers, sulfur heat stabilizers, and difunctional heat stabilizers.

Examples of the hindered phenol heat stabilizer include Irganox 1010 (manufactured by BASF Japan Ltd., pentaerythritol tetrakis[3-(3,5-di-tert-butyl-4-hydroxyphenyl)propionate]), Irganox 1076 (manufactured by BASF Japan Ltd., octadecyl-3-(3,5-di-tert-butyl-4-hydroxyphenyl)-propionate, Cyanox 1790 (manufactured by American Cyanamid Company, 1,3,5-tris(4-t-butyl-3-hydroxy-2,6-dimethylbenzyl)isocyanuric acid), Irganox 1098 (manufactured by BASF Japan Ltd., N,N'-(hexane-1,6-diyl)bis[(3-(3,5-di-tert-butyl-4-hydroxyphenyl)propionamide]), and Sumilizer GA-80 (manufactured by Sumitomo Chemical Co., Ltd., 3,9-bis[2-{3-(3-t-butyl-4-hydroxy-5-methylphenyl)propionyloxy}-1,1-dimethylethyl]-2,4,8,10-tetraoxaspiro[5.5]undecane).

Examples of the hindered amine heat stabilizer include Nylostab S-EED (manufactured by Clariant (Japan) K.K., 2-ethyl-2'-ethoxy-oxalanilide).

Examples of the phosphorous heat stabilizer include Irgafos 168 (manufactured by BASF Japan Ltd., tris(2,4-di-tert-butylphenyl)phosphite), Irgafos 12 (manufactured by BASF Japan Ltd., 6,6',6"-[nitrilotris (ethyleneoxy)]tris(2,4,8,10-tetra-tert-butyldibenzo[d,f][1,3,2]dioxaphosphepin), Irgafos 38 (manufactured by BASF Japan Ltd., bis(2,4-bis(1,1-dimethylethyl)-6-methylphenyl)phosphorous acid ethyl ester), ADKSTAB 329K (manufactured by Asahi Denka Co., Ltd., tris(mono-dinonylphenyl)phosphite), ADKSTAB PEP36 (manufactured by Asahi Denka Co., Ltd., bis(2,6-di-tert-butyl-4-methylphenyl)pentaerythritol-di-phosphite), Hostanox P-EPQ (manufactured by Clariant AG, tetrakis(2,4-di-tert-butylphenyl)-4,4'-biphenylenediphosphonite), GSY-P101 (manufactured by Sakai Chemical Industry Co., Ltd., tetrakis(2,4-di-tert-butyl-5-methylphenyl)-4,4'-biphenylenediphosphonite), and Sumilizer GP (manufactured by Sumitomo Chemical Co., Ltd., 6-[3-(3-tert-butyl-4-hydroxy-5-methylphenyl)propoxy]-2,4,8,10-tetra-tert-butyldibenz[d,f][1,3,2]-dioxaphosphepin).

Examples of the sulfur heat stabilizer include DSTP (Yoshitomi) (manufactured by Yoshitomi Ltd., distearyl thiodipropionate), Seenox 412S (manufactured by SHIPRO KASEI KAISHA, LTD., pentaerythritol tetrakis-(3-dodecylthiopropionate), and Cyanox 1212 (manufactured by American Cyanamid Company, lauryl stearyl thiodipropionate).

Examples of the difunctional heat stabilizer include Sumilizer GM (manufactured by Sumitomo Chemical Co., Ltd., 2-tert-butyl-6-(3-tert-butyl-2-hydroxy-5-methylbenzyl)-4-methylphenylacrylate), and Sumilizer GS (manufactured by Sumitomo Chemical Co., Ltd., 2-[1-(2-hydroxy-3,5-di-tert-pentylphenyl)ethyl]-4,6-di-tert-pentylphenylacrylate) .

Of these, phosphorous heat stabilizers are preferable considering the prevention of a filter pressure increase during the film formation, more preferably phosphorous heat stabilizers represented by formula (2), and further preferably phosphorous heat stabilizers represented by the formula (2) wherein $R^1$ to $R^4$ are all 2,4-di-tert-butyl-5-methylphenyl group.

[Formula 2]

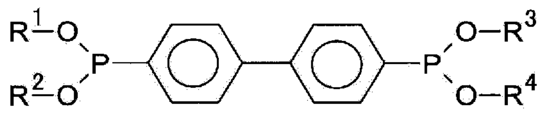

(2)

In the formula (2), $R^1$ to $R^4$ independently represent hydrogen, 2,4-di-tert-butyl-5-methylphenyl group, or 2,4-di-tert-butylphenyl group.

Examples of the phosphorous heat stabilizer represented by the formula (2) include Hostanox P-EPQ and GSY-P101.

Considering the prevention of film strength deterioration, hindered phenol heat stabilizers are preferable. The thermal decomposition temperature of hindered phenol heat stabilizer is preferably 320°C or more, and more preferably 350°C or more. Examples of the hindered phenol heat stabilizer having a thermal decomposition temperature of 320°C or more include Sumilizer-GA-80. The hindered phenol heat stabilizer having an amide bond can prevent the film strength deterioration. Examples of the hindered phenol heat stabilizer having an amide bond include Irganox 1098. Further, a hindered phenol heat stabilizer used in combination with a difunctional heat stabilizer can further reduce the film strength deterioration.

These heat stabilizers can be used singly or can be used in combination. For example, a hindered phenol heat stabilizer and a phosphorous heat stabilizer used in combination can prevent the filter pressure increase during the film formation and prevent the film strength deterioration. A hindered phenol heat stabilizer, a phosphorous heat stabilizer and a difunctional heat stabilizer used in combination can prevent the filter pressure increase during the film formation and further reduce the film strength deterioration.

The combination of a hindered phenol heat stabilizer and a phosphorous heat stabilizer is preferably the combination of Hostanox P-EPQ or GSY-P101 and Sumilizer GA-80 or Irganox 1098. The combination of a hindered phenol heat stabilizer, a phosphorous heat stabilizer and a difunctional heat stabilizer is preferably the combination of Hostanox

P-EPQ or GSY-P101, Sumilizer GA-80 or Irganox 1098 and Sumilizer GS, and more preferably the combination of GSY-P101, Sumilizer GA-80 and Sumilizer GS.

The content of a heat stabilizer in the polyamide resin film with respect to 100 parts by mass of the polyamide resin is preferably 0.01 to 2 parts by mass, and more preferably 0.05 to 1 part by mass. A content of the heat stabilizer of less than 0.01 parts by mass may not be able to prevent the decomposition. On the other hand, a content of more than 2 parts by mass may be economically disadvantageous.

When 2 or more heat stabilizers are used in combination, it is preferable that the individual content of each heat stabilizer and the total content of the heat stabilizers be within the above range.

[Thermoplastic elastomer]

The polyamide resin film can contain a thermoplastic elastomer. The polyamide resin film containing a thermoplastic elastomer can further enhance the durability against repeated folding.

Examples of the thermoplastic elastomer include polyolefin thermoplastic elastomers, polyester thermoplastic elastomers, polyamide thermoplastic elastomers, and styrene thermoplastic elastomers. These thermoplastic elastomers can be used singly, or 2 or more can be used in combination.

Of these, polyolefin thermoplastic elastomers are preferable. Examples of the polyolefin thermoplastic elastomer include those having hard segment composed of thermoplastic high crystallinity polyolefin and soft segment formed with ethylene-$\alpha$-olefin copolymer rubber.

The thermoplastic elastomer preferably has functional groups reactable with terminal groups of a polyamide resin such as an amino group and a carboxyl group and the amide group of the backbone. The functional group is preferably at least one selected from a carboxyl group or an anhydride thereof, an amino group, a hydroxyl group, an epoxy group, an amide group, and an isocyanate group, with dicarboxylic acid and/or a derivative thereof being more preferable. When the polyamide resin contains a thermoplastic elastomer with no functional group reactable with terminal groups thereof, the stretch property during biaxial stretching may deteriorate and a uniformly stretched film may not be obtained, and the obtained stretched film may have insufficient deformation resistance.

In the present invention, when a semi-aromatic polyamide resin is used as the polyamide resin, it is particularly preferable to use a thermoplastic elastomer modified with dicarboxylic acid and/or a derivative thereof as the thermoplastic elastomer. Examples of such an elastomer include TAFMER manufactured by Mitsui Chemicals, Inc. Addition of the thermoplastic elastomer more than necessary affects the transparency of the film to be obtained, and thus a content of the thermoplastic elastomer is preferably less than 5 mass% of the polyamide resin.

[Additives]

The polyamide resin film can contain various additives as needed within the range of not affecting the effects of the present invention. Examples of the additive include coloring agents such as pigments and dyes; anti-coloring agents, anti-oxidants, weather resistance improvers, flame retardants, plasticizers, mold release agents, reinforcing agents, modifiers, antistatic agents, UV absorbers, anti-fogging agents, and various polymer resins.

Examples of the pigment include titanium oxides. Examples of the weather resistance improver include benzotriazole compounds. Examples of the flame retardant include brominated flame retardants and phosphorus flame retardants. Examples of the reinforcing agent include talc.

These additives can be added at any steps during the production of the polyamide resin film.

[Surface treatment]

The polyamide resin film can be treated to enhance the adhesiveness of the surface thereof as needed. Examples of the method of enhancing the adhesiveness include corona treatment, plasma treatment, acid treatment, and flame treatment.

(Layer consisting of the polyimide resin)

In the present invention, a commercial polyimide resin film can be used as the layer consisting of a polyimide resin. Examples of the commercial polyimide resin film include TORMED Type S (manufactured by I.S.T Corporation) and TORMED Type X (manufactured by I.S.T Corporation).

The polyimide resin film preferably has a thickness of 1 to 100 $\mu$m, more preferably 2 to 75 $\mu$m, and further preferably 3 to 50 $\mu$m.

The layer consisting of the polyimide resin can be a coated film obtained by applying a varnish of a polyimide resin. The coated film preferably has a thickness of 1 to 20 $\mu$m, more preferably 2 to 15 $\mu$m, and further preferably 3 to

10 μm.

The layer consisting of the polyimide resin preferably has a haze value measured in accordance with JIS K7105 of 2% or less, more preferably 1.5% or less, and further preferably 1.0% or less.

(Lamination)

For the method of laminating the layer consisting of a polyimide resin and the layer consisting of a polyamide resin as described above, there is a method of laminating the polyimide resin film and the polyamide resin film via an adhesive layer. This method, when employed, can use as the adhesive a known adhesive such as an acrylic adhesive, a silicone adhesive, a urethane adhesive, or a polyamide adhesive, and can also use OCA (Optical Clear Adhesive). The OCA is not particularly limited, and examples include OCA of a base material-free adhesive tape sheet, and liquid UV-curable resins (OCR·pre-cure OCR).

In the present invention, the adhesive layer is preferably formed by using an adhesive containing a dimer acid polyamide resin and a crosslinker so that the laminate can obtain good durability against repeated folding.

The dimer acid polyamide resin constituting the adhesive layer has a large hydrocarbon group and thus has good flexibility when compared with resins such as nylon 6, nylon 66, and nylon 12 commonly used as the polyamide resin.

The dimer acid polyamide resin preferably contains, as the dicarboxylic acid component, 50 mol% or more of dimer acid, more preferably 60 mol% or more, and further preferably 70 mol% or more, of the entire dicarboxylic acid components. When a proportion of a dimer acid is less than 50 mol%, it is difficult to achieve properties and effects of the dimer acid polyamide resin.

The dimer acid herein refers to those obtained by dimerizing unsaturated fatty acids having 18 carbon atoms such as oleic acid and linoleic acid and can include, as long as 25 mass% or less of the dimer acid component, a monomeric acid, a monomer, (18 carbon atoms), a trimeric acid, a trimer, (54 carbon atoms), and other polymerized fatty acids having 20 to 54 carbon atoms, and can further include those with reduced unsaturation degree by hydrogenation. Dimer acids are commercially available as HARIDIMER SERIES (manufactured by Harima Chemicals, Inc.), Pripol series (manufactured by Croda Japan K.K.), and Tsunodyme series (manufactured by TSUNO CO., LTD.), and these can be used.

Components other than the dimer acids, when used as the dicarboxylic acid component of the dimer acid polyamide resin, are preferably adipic acid, azelaic acid, sebacic acid, pimelic acid, suberic acid, nonane dicarboxylic acid, and fumaric acid, and a content of less than 50 mol% of these provides easier control of the resin softening temperature, adhesiveness and the like.

For the diamine component of the dimer acid polyamide resin, ethylenediamine, hexamethylenediamine, tetramethylenediamine, pentamethylenediamine, m-xylenediamine, phenylenediamine, diethylenetriamine, and piperazine can be used, with ethylenediamine, hexamethylenediamine, diethylenetriamine, m-xylenediamine, and piperazine being preferable.

When a charge ratio between the dicarboxylic acid component and the diamine component is changed when polymerizing the dimer acid polyamide resin, a resin polymerization degree, or an acid value or an amine value can be controlled.

The amine value of the dimer acid polyamide resin is preferably less than 1.0 mg KOH/g, more preferably less than 0.7 mg KOH/g, and further preferably less than 0.4 mg KOH/g. The dimer acid polyamide resin having an amine value of 1.0 mg KOH/g or more, when used to an adhesive layer, may deteriorate the heat resistance of the adhesive layer.

The acid value of the dimer acid polyamide resin is preferably 1 to 20 mg KOH/g, more preferably 1 to 15 mg KOH/g, further preferably 3 to 12 mg KOH/g, and most preferably 3 to 7 mg KOH/g. The dimer acid polyamide resin having an acid value of less than 1 mg KOH/g has a difficulty in obtaining a stable adhesive layer forming coating agent to form the adhesive layer, whereas an acid value of more than 20 mg KOH/g may deteriorate the chemical resistance of the adhesive layer, the good property the dimer acid polyamide resin naturally has.

The acid value is defined in terms of the number of milligrams of potassium hydroxide required to neutralize the acidic components contained in 1 g of the resin. On the other hand, the amine value is expressed in terms of the number of milligrams of potassium hydroxide to be a molar equivalent to the basic components in 1 g of the resin. Both values are measured by the method described in JIS K2501.

The softening temperature of the dimer acid polyamide resin is preferably 70 to 250°C, more preferably 80 to 240°C, and further preferably 80 to 200°C. When a softening temperature is less than 70°C, the obtained adhesive layer tends to have low heat resistance and an increased tack feel at room temperature. On the other hand, when a softening temperature is more than 250°C, the preparation of an adhesive layer forming coating agent by dispersing the resin in an aqueous medium tends to be difficult and also the adhesive layer to be obtained may fail to obtain sufficient adhesiveness due to insufficient resin liquidity when adhered.

The adhesive layer preferably contains a crosslinker together with the dimer acid polyamide resin. The dimer acid polyamide resin, when crosslinked, can obtain the adhesive layer having low liquidity even when heated to a

temperature more than the resin softening temperature (low liquidity at a high temperature).

For the crosslinker, any agent can be used as long as the dimer acid polyamide resins can be crosslinked with each other. For example, hydrazide compounds, isocyanate compounds, melamine compounds, urea compounds, epoxy compounds, carbodiimide compounds, and oxazoline compounds are preferable, and these compounds can be used singly or in mixture. Of these, oxazoline compounds, carbodiimide compounds, epoxy compounds, and isocyanate compounds are preferable. In addition, self-crosslinkable compounds and compounds having multivalent coordination can also be used as the crosslinker.

For the crosslinker, a commercial product can be used considering easy availability. Specifically, Otsuka Chemical Co., Ltd. APA series (APA-M950, APAM980, APA-P250, APA-P280 and the like) and the like can be used as the hydrazide compound. BASF Japan Ltd. BASONAT PLR8878, BASONAT HW-100, Sumitomo Bayer Urethane Co., Ltd. Bayhydur 3100, Bayhydur VPLS2150/1 and the like can be used as the isocyanate compound. Mitsui Cytech Co., Ltd. CYMEL 325 can be used as the melamine compound. DIC CORPORATION BECKAMINE series and the like can be used as the urea compound. Nagase ChemteX Corporation DENACOL series (EM-150, EM-101 and the like), and ADEKA Corporation Adeka resin EM-0517, EM-0526, EM-051R, EM-11-50B and the like can be used as the epoxy compound. Nisshinbo Chemical Inc. Carbodilite series (SV-02, V-02, V-02-L2, V-04, E-01, E-02, V-01, V-03, V-07, V-09, V-05) and the like can be used as the carbodiimide compound. NIPPON SHOKUBAI CO., LTD. EPOCROS series (WS-500, WS-700, K-1010E, K-1020E, K-1030E, K-2010E, K-2020E, K-2030E) and the like can be used as the oxazoline compound. These are commercially available as crosslinker-containing dispersions or solutions.

The adhesive layer containing the dimer acid polyamide resin and a crosslinker preferably contains 0.5 to 50 parts by mass of a crosslinker with respect to 100 parts by mass of the dimer acid polyamide resin. A content of a crosslinker of less than 0.5 parts by mass is less likely to obtain desired crosslinking effects such as low liquidity at a high temperature in the adhesive layer, whereas a content of more than 50 parts by mass may fail to obtain the basic performance as the adhesive layer as a result of deteriorated liquid stability and workability of the adhesive layer forming coating agent.

The thickness of the adhesive layer in the laminate is not particularly limited and can be optionally selected in accordance with the kind of an adherend. In general, the thickness of the adhesive layer preferably ranges from 0.05 to 50 μm, and more preferably from 0.1 to 20 μm. A thickness of less than 0.05 μm may fail to express sufficient adhesiveness, whereas a thickness of more than 50 μm may saturate the adhesiveness thereby being economically disadvantageous.

Examples of the method of adhering the polyimide resin film and the polyamide resin film using the dimer acid polyamide resin include a method of applying a coating agent containing a dimer acid polyamide resin to one of the resin films, drying to form an adhesive layer, and subsequently overlapping the other resin film on the adhesive layer and heat pressing.

The application of the coating agent can employ a known method. For example, employable methods include gravure roll coating, reverse roll coating, wirebar coating, lip coating, die coating, air knife coating, curtain flow coating, spray coating, immersion coating, and a brush painting method. These methods enable the uniform application of the coating agent on the surface of the resin film. After application, dry heat treatment is carried out so that the adhesive layer consisting of the dense coated film can be formed as closely adhered to the resin films.

The conditions when the other resin film is overlapped on the formed adhesive layer and heat pressed are preferably a temperature of 180 to 200°C for 1 to 15 minutes at a pressure of 0.05 to 1.0 MPa.

<Hard coat layer>

In the laminate of the present invention, a hard coat layer can be laminated by applying a hard coat paint based on acryl, a silane coupling agent or the like. The laminate of the present invention with the hard coat layer laminated thereon can enhance performances such as anti-scratching property. Further, the laminate of the present invention has good bending resistance and thus still has good bending resistance as the laminate with the hard coat layer laminated thereon.

It is preferable that the laminate and the hard coat layer be sufficiently close adhered. When the layer consisting of a polyimide resin or the layer consisting of a polyamide resin and the hard coat layer constituting the laminate have insufficient adhesiveness, the laminate with the hard coat layer laminated thereon causes a peel at the interface with the hard coat layer from repeated bending and, as a result, the natural bending resistance of the laminate is lost thereby increasing a concern of splits.

For the increase of adhesiveness between the layer consisting of a polyamide resin and the hard coat layer, the adhesive layer is preferably provided in advance between the layer consisting of a polyamide resin and the hard coat layer. Any adhesive layer can be used, however, when the hard coat layer is acrylic, a provision of the adhesive layer containing the dimer acid polyamide described earlier can enhance the adhesiveness between the layer consisting of a polyamide resin and the hard coat layer.

<Other layers>

In the laminate of the present invention, layers having various functions can be laminated. These layers having various functions can be laminated on one surface or both surfaces of the laminate by providing coated layers and laminated layers.

Examples of the coating agent include adhesive paints based on amides, urethanes, esters, olefins and the like, antistatic paints based on a surfactant, a conductive polymer, a carbon, a metal oxide and the like, release paints based on silicone, olefin and the like, gas barrier paints containing polyvinyl alcohol, polyvinylidene chloride and the like, and UV absorber paints based on hindered amine, zinc oxide and the like.

In the laminate of the present invention, an inorganic substance such as a metal or an oxide thereof, other kinds of polymers, paper, woven fabric, unwoven fabric, or wood can also be laminated other than the application of the hard coat paint and the coating agent.

Examples of the inorganic substance include aluminum, alumina, and silica.

Examples of the other kinds of polymers include following resins (a) to (p).

(a) polyolefin resins such as high density polyethylene, medium density polyethylene, low density polyethylene, straight chain low density polyethylene, ultra-high molecular weight polyethylene, polypropylene, ethylene/propylene copolymer (EPR), ethylene/butene copolymer (EBR), ethylene/vinyl acetate copolymer (EVA), ethylene/vinyl acetate saponified copolymer (EVOH), ethylene/acrylic acid copolymer (EAA), ethylene/methacrylic acid copolymer (EMAA), ethylene/methyl acrylate copolymer (EMA), ethylene/methyl methacrylate copolymer (EMMA), and ethylene/ethyl acrylate copolymer (EEA);

(b) another polyolefin resins in which a functional group such as (i) a carboxyl group or a metal salt thereof, (ii) an acid anhydride group, (iii) an epoxy group and the like is introduced into above mentioned polyolefin resins (a) by

(i) a carboxyl group-containing unsaturated compound such as acrylic acid, methacrylic acid, maleic acid, fumaric acid, itaconic acid, crotonic acid, mesaconic acid, citraconic acid, glutaconic acid, cis-4-cyclohexane-1,2-dicarboxylic acid, and endobicyclo-[2.2.1]-5-heptane-2,3-dicarboxylic acid and a metal salt thereof (Na, Zn, K, Ca, Mg) ;

(ii) an acid anhydride group-containing unsaturated compound such as maleic anhydride, itaconic anhydride, citraconic anhydride, and endobicyclo-[2.2.1]-5-heptane-2,3 dicarboxylic anhydride; and

(iii) an epoxy group-containing unsaturated compound such as glycidyl acrylate, glycidyl methacrylate, glycidyl ethacrylate, glycidyl itaconate, or glycidyl citraconate;

(c) polyester resins such as polybutylene terephthalate, polyethylene terephthalate, polyethylene isophthalate, PET/PEI copolymer, polyarylate, polybutylene naphthalate, polyethylene naphthalate, and liquid crystal polyester;

(d) polyether resins such as polyacetal and polyphenyleneoxide;

(e) polysulfone resins such as polysulfone and polyethersulfone;

(f) polythioether resins such as polyphenylene sulfide and polythioether sulfone;

(g) polyketone resins such as polyether ether ketone and polyaryl ether ketone;

(h) polynitrile resins such as polyacrylonitrile, polymethacrylonitrile, acrylonitrile/styrene copolymer, methacrylonitrile/styrene copolymer, acrylonitrile/butadiene/styrene copolymer (ABS), and methacrylonitrile/styrene/butadiene copolymer (MBS);

(i) polymethacrylate resins such as polymethylmethacrylate and polyethylmethacrylate;

(j) polyvinyl ester resins such as polyvinyl acetate;

(k) polyvinyl chloride resins such as polyvinylidene chloride, polyvinyl chloride, vinyl chloride/vinylidene chloride copolymer, and vinylidene chloride/methyl acrylate copolymer;

(l) cellulose resins such as cellulose acetate and cellulose butyrate;

(m) polycarbonate resins such as polycarbonate,

(n) polyimide resins such as thermoplastic polyimide, polyamideimide, and polyether imide;

(o) fluorine resins such as polyvinylidene fluoride, polyvinyl fluoride, ethylene/tetrafluoroethylene copolymer (ETFE), polychlorotrifluoroethylene (PCTFE), ethylene/chlorotrifluoroethylene copolymer (ECTFE), tetrafluoroethylene/hexafluoropropylene copolymer (TFE/HFP, FEP), tetrafluoroethylene/hexafluoropropylene/vinylidene fluoride copolymer (TFE/HFP/VDF, THV), and tetrafluoroethylene/fluoro(alkyl vinyl ether) copolymer (PFA);

(p) thermoplastic polyurethane resins, polyurethane elastomers, polyester elastomers, polyamide elastomers, and melamines.

<Use>

The laminate of the present invention has good bending resistance and thus can be used as a folding member. For example, the laminate can be used for folding image displays such as a folding smartphone and a folding touch screen, and a folding (electronic) album. The number of folding portions at the member having a foldable structure can be one portion or a plurality of portions. The direction of folding can also be optionally determined as needed.

The laminate of the present invention, in addition to good bending resistance, has good mechanical properties, adhesiveness, heat resistance, moist-heat resistance, chemical resistance, and low water absorbency. For this reason, the laminate of the present invention can be used preferably in the following fields. In other words, the laminate can be used preferably as an optical substrate such as OLED, an electronic substrate material such as an LED-mounted substrate, a flexible printed wiring board, a flexible flat cable, a cover lay film for a flexible printed wiring board and the like.

Examples

Hereinafter, the present invention is further specifically described in reference to examples. However, the present invention is not limited thereto.

The obtained laminate and the single film constituting the laminate were evaluated for properties by the following method.

(1) Puncture strength

A test piece was fixed while being pulled tight across a circular mold having an inner diameter of 100 mmϕ, a needle with the tip having a curvature radius of 0.5 mm was allowed to perpendicularly contact and puncture the surface of the test piece at the central part of this test piece at a rate of 50 mm/min to measure a puncture strength value at which the test piece broke. When a test piece was a laminate (layer I/layer II), the test piece was fixed so that the needle tip directly contacted the layer I surface.

The puncture strength was calculated from the puncture strength value and a thickness of the test piece measured using a dial gauge using the following formula. The number of test pieces was 10, and an average value of the puncture strengths was determined. Evaluations were made using the results by the following criteria. The puncture strength must be 0.60 N/μm or more.

Puncture strength = (puncture strength value)/(thickness)

Good: 0.60 N/μm or more
Poor: Less than 0.60 N/μm

(2) Bending resistance (Visual evaluation)

A test piece cut out to 30 mm × 100 mm was sufficiently adjusted for conditions at 20°C and 65%RH and then set on an endurance tester (manufactured by YUASA SYSTEM Co., Ltd., DLDMLH-FU type). Under such an atmosphere, bend tests were carried out in accordance with JIS K5600-5-1 wherein 180°-bending was repeated 600,000 times using 10 mm-diameter (test A), 3 mm-diameter (test B), and 2 mm-diameter (test C) cylindrical mandrels, respectively. When a test piece was a laminate (layer I/layer II), the laminate was bent so that layer I faced inward.

Each of the bend tests A, B, and C was carried out by 5 tests respectively to visually evaluate for splits, whitening, and bending marks by the following criteria, and the lowest ranked result was defined as the bending resistance. The test pieces broke in test A were not evaluated thereafter.

The evaluation was carried out using the same criteria for both the laminate and the single film constituting the laminate.

<Split>

Good: No split or breakage.
Fair: Splits were caused but no breakage.
Poor: Splits were caused and breakage occurred.

<Whitening>

Good: No whitening at bent portions.
Fair: Deteriorated transparency at bent portions.
Poor: Whitening occurred at bent portions.

<Bending marks>

Good: No bending marks left.
Fair: Bending wrinkles caused.
Poor: Bending marks were left.

(3) Bending resistance (Edge tear resistance)

A strip test piece (20 mm × 100 mm) was cut out from the test peace (30 mm × 100 mm) subjected to the bend test in the above (2).

An edge tear resistance at a bent portion was measured in accordance with JIS C2151 using, as a test jig, a V-notched plate (thickness 1 mm, V-shaped angle 150°) whereby the strip test piece was hooked so that the bent portion was fit in the V-shaped groove and pulled at a rate of 200 mm/min using a tensile tester. The number of test pieces was 5 and an average value of the edge tear resistance was calculated.

The measurement of the edge tear resistance was carried out to all the test pieces subjected to the bend tests A, B, and C, and the test pieces broke in the bent tests were not evaluated thereafter.

A retention rate of edge tear resistance was calculated by the following formula.

Edge tear resistance retention rate (%) = (edge tear resistance of the laminate subjected to the bend test)/(edge tear resistance of the laminate not subjected to the bend test) x 100

(4) Impact resistance

After sufficient condition adjustment to 20°C and 65% RH, a test piece cut out to 100 mm × 100 mm was measured for an impact strength using a film impact tester (manufactured by Toyo Seiki Seisaku-sho, Ltd.) having a semi-sphere of 1/2 inches and 3.0 kgf/cm as a impact head mounted and the test piece was fixed with an air pressure of 3 to 4 kg/cm$^2$ against which the impact head was caused to collide. When a test piece was a laminate (layer I/layer II), the test piece was fixed so that the impact head directly contacted the layer I surface. The measurement was carried out by 10 tests, an average value was determined to evaluate the impact resistance by the following criteria.

Good: Impact strength of 2.0 J or more
Fair: Impact strength of 1.5 J or more and less than 2.0 J
Poor: Impact strength of less than 1.5 J

(5) Haze

Total transmittance (Tt) and diffuse transmittance (Td) were measured using a haze meter (manufactured by NIPPON DENSHOKU INDUSTRIES CO., LTD., NDH2000 type) in accordance with JIS K7105 and haze was calculated by the following formula.

$$\text{Haze (\%)} = (Td/Tt) \times 100$$

(6) Glass transition temperature

10 mg of a test piece of each film constituting the laminate was subjected to a differential scanning calorimetry (manufactured by PerkinElmer Co., Ltd., DSC-7), in which a temperature was increased from 20°C to 350°C at a rate of 10°C/min (1st Scan) under a nitrogen atmosphere and retained at 350°C for 5 minutes. Then, the temperature was dropped to 20°C at a rate of 100°C/min and retained at 20°C for 5 minutes, followed by further increasing the temperature to 350°C at a rate of 20°C/min (2nd Scan). Subsequently, the peak top temperature of the crystal melting peak observed in the 2nd Scan was defined as the melting temperature, and the intermediate point between the temperatures of 2 bend points derived from glass transition was defined as the glass transition temperature.

(7) Reflow heat resistance

A test piece cut out to 50 mm × 50 mm was subjected to an infrared heating reflow oven, in which a temperature was increased to 260°C at a rate of 100°C/min and retained for 10 seconds. The reflow-processed test piece was observed and evaluated for the reflow heat resistance by the following criteria.

Good: No deformation such as shrinking or warping was found.
Fair: Wrinkles were caused by shrinkage.
Poor: Shrank and deformation such as warping was found.

The following film was used as the resin layer constituting the laminate.

(1) Polyamide 9T film

(Production of polyamide 9T resin)

A reactor was charged with 1264 g of 1,9-nonanediamine (NMDA), 316 g of 2-methyl-1,8-octanediamine (MODA), 1627 g of terephthalic acid (TPA, average particle size: 80 μm) (NMDA:MODA:TPA = 80:20:99, molar ratio), 48.2 g of benzoic acid (4.0 mol% to the total number of moles of dicarboxylic acid component and diamine component), 3.2 g of phosphorous acid (0.1 mass% to the total amount of dicarboxylic acid component and diamine component), and 1100 g of water and purged with nitrogen. Further, the content was stirred at 80°C for 0.5 hours at 28 rpm every minute, followed by increasing a temperature to 230°C. Subsequently, the mixture was heated at 230°C for 3 hours. Thereafter, the mixture was cooled and the reaction product was taken out. The reaction product was crushed, then heated at 220°C for 5 hours in a dryer under a nitrogen stream and solid-phase polymerized to obtain a polymer. Then, the polymer was melt-kneaded at a cylinder temperature of 320°C and extruded as strands. Subsequently, the strands were cooled and cut to prepare a polyamide 9T resin as pellets.

(Production of polyamide 9T film (PA9T-1 (25), PA9T-1 (50) not containing silica)

A hindered phenol heat stabilizer "Sumilizer GA-80" was contained in such a way as to be 0.2 parts by mass with respect to 100 parts by mass of the polyamide 9T resin, fed to a single screw extruder with a cylinder temperature heated to 320°C and melted thereby to obtain a molten polymer. The molten polymer was filtered using a sintered metallic fiber filter (manufactured by Nippon Seisen Co., Ltd., "NF-10", absolute filtration diameter: 30 μm). Subsequently, the polymer was extruded into a film shape using a T-die heated to 320°C to prepare a film-shaped molten product. The molten product was closely adhered and cooled on a cooling roll preset to 50°C by the electrostatic application method to obtain a substantially unoriented and unstretched film (thickness: 250 μm) .

Both ends of this unstretched film were held with clips and guided to a tenter system simultaneous biaxial stretching machine (inlet width: 193 mm, outlet width: 605 mm) to carry out simultaneous biaxial stretching. Stretching conditions had the temperature at a preheat section of 120°C, the temperature at a stretch section of 130°C, the stretch-strain rate in the MD direction of 2400%/min, the stretch-strain rate in the TD direction of 2760%/min, the stretch ratio in the MD direction of 3.0 times, and the stretch ratio in the TD direction of 3.3 times.

Then, in the same tenter, thermal fixation was carried out at 270°C and 5% relaxation treatment was carried out in the film width direction to obtain a biaxially stretched polyamide 9T film (PA9T-1 (25)) having a thickness of 25 μm.

The same operation was further carried out also to obtain a biaxially stretched polyamide 9T film (PA9T-1 (50)) having a thickness of 50 μm.

(Production of polyamide 9T film (PA9T-2 (25), PA9T-2 (50)) containing silica)

A biaxially stretched polyamide 9T film (PA9T-2 (25)) having a thickness of 25 μm was obtained by carrying out the same operation as the production of the polyamide 9T film not containing silica, except that aggregated silica having an average particle size of 2.5 μm and a hindered phenol heat stabilizer "Sumilizer GA-80" were contained in such a way as to be 0.08 parts by mass and 0.2 parts by mass with respect to 100 parts by mass of the polyamide 9T resin.
The same operation was further carried out also to obtain a biaxially stretched polyamide 9T film (PA9T-2 (50)) having a thickness of 50 μm.

(2) Polyamide 10T film (PA10T (25))

A polyamide 10T resin was prepared by carrying out the same operation as the polyamide 9T resin not containing silica, except that the diamine was changed to 1,10-decanediamine.
A polyamide 10T film (PA10T (25)) was obtained in the same manner as the polyamide 9T film, except that the polyamide 10T resin was used in place of the polyamide 9T resin.

(3) Polyamide 10N film (PA10N (25))

A polyamide 10N resin was prepared by carrying out the same operation as the polyamide 10T resin, except that the terephthalic acid was changed to naphthalenedicarboxylic acid.
A polyamide 10N film (PA10N (25)) was obtained in the same manner as the polyamide 9T film, except that the polyamide 9T resin was changed to the polyamide 10N resin.

(4) Polyamide 6 film (PA6 (25))

UNITIKA LTD. "EMBLEM ON-25" (thickness 25 μm) was used.

(5) Polyimide film (PI-1 (25), PI-2 (50))

I.S.T Corporation "TORMED Type S" (thickness 25 μm, haze 3.0) and "TORMED Type X" (thickness 50 μm, haze 0.4) manufactured by the same company were used respectively as PI-1(25) and PI-2(50).

(6) Polyurethane film (TPU (25))

Takeda Sangyo Co., Ltd. "Tough Grace" (thickness 25 μm) was used.

(7) Polyethylene terephthalate film (PET (50))

UNITIKA LTD. "EMBLET T-50" (thickness 50 μm) was used.

(8) Polycarbonate film (PC (50))

Sumitomo Chemical Co., Ltd. "TECHNOLOY" (thickness 50 μm) was used.
The following water dispersion of a dimer acid polyamide resin was produced as the raw material for the adhesive layer forming coating agent.

(Water dispersion of a dimer acid polyamide resin)

A hermetic pressure-resistant 1-litter glass container equipped with a stirrer and a heater was charged with 75.0 g of a dimer acid polyamide resin (containing a 100 mol% of dimer acid as the dicarboxylic acid component and 100 mol% of ethylenediamine as the diamine component, acid value 10.0 mg KOH/g, amine value 0.1 mg KOH/g, softening temperature 110°C, and melt viscosity 1,100 mPa·s at 200°C), 37.5 g of isopropanol (IPA), 37.5 g of tetrahydrofuran (THF), 7.2 g of N,N-dimethylethanolamine, and 217.8 g of distilled water. While stirring the content at a rotation speed of 300 rpm, inside the system was heated to carry out stirring with heating at 120°C for 60 minutes. Subsequently, the mixture was cooled to a temperature close to room temperature (about 30°C) while stirring and then filtered, after adding 100 g of distilled water, using a 300-mesh stainless steel filter (wire diameter 0.035 mm, plane weave) while slightly applying pressure. The obtained water dispersion was put in a 1 L-recovery flask, and the flask was immersed in a hot-water bath heated to 80°C while reducing the pressure using an evaporator, whereby about 100 g of mixed

medium of IPA, THF, and water was distilled off thereby to obtain an opalescent uniform water dispersion of the dimer acid polyamide resin. A solid content concentration of the obtained dispersion was 20 mass%, a number average particle size of the resin in the dispersion was 0.040 μm, pH was 10.4, and a viscosity was 36 mPa·s.

Example 1

A water dispersion of the dimer acid polyamide resin, an oxazoline group-containing polymer aqueous solution (manufactured by NIPPON SHOKUBAI CO., LTD., EPOCROS WS-700, solid content concentration 25 mass%), and acrylic particles (manufactured by JXTG Energy Corporation, average particle size 5 μm) were combined so that the part by mass of respective solid contents was in a ratio of 100/10/1, mixed and stirred for 5 minutes at room temperature thereby to obtain an adhesive layer forming coating agent.

The obtained coating agent was applied to one surface of a polyamide 9T film (PA9T-1(25)) to a thickness of 3 μm and dried under condition of 150°C and 30 seconds thereby to obtain a laminate A having a composition consisting of the adhesive layer/polyamide 9T film.

A polyimide film (PI-1(25)) was overlapped on the adhesive layer of the laminate A and pressed using a heat press machine (180°C, 15 minutes, 2MPa) to obtain a laminate having the composition of the polyimide film (layer I)/adhesive layer/polyamide 9T film (layer II).

Examples 2 to 10, Comparative Examples 1 to 4

The same operation as Example 1 was carried out to obtain laminates in such a way as to have the compositions shown in Tables 1 and 2.

The laminates obtained in Examples and Comparative Examples were evaluated for the puncture strength, edge tear resistance and the like, and each of the single films constituting the laminate in Comparative Examples 5 to 16 was also evaluated, and the results are shown in Tables 1 to 3.

[Table 1]

| | | | | Example | | | | | | | | | |
|---|---|---|---|---|---|---|---|---|---|---|---|---|---|
| | | | | 1 | 2 | 3 | 4 | 5 | 6 | 7 | 8 | 9 | 10 |
| Laminate | Composition | | Layer I | PI-1 (25) | PI-1 (25) | PI-2 (50) | PI-2 (50) | PI-1 (25) | PI-2 (50) | PI-2 (50) | PI-1 (25) | PI-1 (25) | PI-1 (25) |
| | | | Layer II | PA9T-1 (25) | PA9T-1 (50) | PA9T-1 (25) | PA9T-1 (50) | PA9T-2 (50) | PA9T-2 (50) | PA9T-1 (25) | PA10T (25) | PA10N (25) | PA6 (25) |
| | Total thickness (µm) | | | 53 | 77 | 78 | 103 | 78 | 104 | 78 | 51 | 53 | 52 |
| Puncture property | Puncture force (N) | | | 35 | 56 | 49 | 70 | 57 | 71 | 49 | 58 | 64 | 36 |
| | Puncture strength (N/µm) | | | 0.66 | 0.73 | 0.63 | 0.68 | 0.73 | 0.68 | 0.63 | 1.14 | 1.21 | 0.69 |
| | Evaluation | | | Good | Good | Good | Good | Good | Good | Good | Good | Good | Good |
| Bending resistance 600,000 times | Visual evaluation | A Diameter 10 mm | Split | Good | Good | Good | Good | Good | Good | Good | Good | Good | Good |
| | | | Whitening | Good | Good | Good | Good | Good | Good | Good | Good | Good | Good |
| | | | Bending marks | Good | Good | Fair | Fair | Good | Fair | Fair | Good | Good | Good |
| | | B Diameter 3 mm | Split | Good | Good | Good | Good | Good | Good | Good | Fair | Fair | Good |
| | | | Whitening | Good | Good | Fair | Fair | Good | Fair | Fair | Fair | Fair | Good |
| | | | Bending marks | Good | Good | Fair | Fair | Good | Fair | Fair | Fair | Fair | Good |
| | | C Diameter 2 mm | Split | Good | Good | Fair | Fair | Good | Fair | Good | Fair | Fair | Good |
| | | | Whitening | Good | Good | Fair | Fair | Fair | Fair | Fair | Fair | Fair | Good |
| | | | Bending marks | Good | Fair | Fair | Poor | Fair | Poor | Poor | Fair | Fair | Good |
| | Edge tear resistance | No bend test | Measured value (N) | 429 | 559 | 625 | 763 | 569 | 774 | 639 | 444 | 466 | 468 |
| | | A Diameter 10 mm | Measured value (N) | 386 | 475 | 500 | 572 | 472 | 557 | 498 | 347 | 345 | 402 |
| | | | Retention rate (%) | 90 | 85 | 80 | 75 | 83 | 72 | 78 | 78 | 74 | 86 |
| | | B Diameter 3 mm | Measured value (N) | 335 | 391 | 419 | 466 | 398 | 464 | 422 | 280 | 289 | 346 |
| | | | Retention rate (%) | 78 | 70 | 67 | 61 | 70 | 60 | 66 | 63 | 62 | 74 |
| | | C Diameter 2 mm | Measured value (N) | 266 | 335 | 381 | 412 | 319 | 402 | 383 | 267 | 285 | 271 |
| | | | Retention rate (%) | 62 | 60 | 61 | 54 | 56 | 52 | 60 | 60 | 61 | 58 |
| Impact resistance | Impact strength | | (J) | 2.5 | 2.6 | >3.0 | >3.0 | 2.7 | >3.0 | >3.0 | 2.4 | 2.3 | >3.0 |
| | | | Evaluation | Good | Good | Good | Good | Good | Good | Good | Good | Good | Good |
| Transparency | Haze (%) | | | 3.2 | 3.2 | 0.8 | 0.9 | 7.2 | 4.9 | 0.8 | 3.2 | 3.3 | 3.8 |
| Heat resistance | Glass transition temperature (°C) | | | 300/120 | 300/120 | 333/120 | 333/120 | 300/120 | 333/120 | 333/120 | 300/125 | 300/131 | 300/58 |
| | Reflow heat resistance | | 260°C x 10 sec | Good | Good | Good | Good | Good | Good | Good | Good | Good | Poor |

[Table 2]

| | | | | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|---|---|
| Laminate | | Composition | | Layer I | PI-1 (25) | PI-2 (50) | PET (50) | PC (50) | PI-1 (25) | PI-2 (50) | - | - |
| | | | | Layer II | TPU (25) | TPU (25) | PA9T-1 (25) | PA9T-1 (25) | - | - | PA9T-1 (25) | PA9T-1 (50) |
| | | Total thickness (μm) | | | 53 | 77 | 77 | 78 | 25 | 50 | 25 | 50 |
| Puncture property | | Puncture force (N) | | | 19 | 39 | 45 | 52 | 17 | 35 | 18 | 35 |
| | | Puncture strength (N/μm) | | | 0.36 | 0.50 | 0.59 | 0.66 | 0.69 | 0.70 | 0.70 | 0.70 |
| | | Evaluation | | | Poor | Poor | Poor | Good | Good | Good | Good | Good |
| Bending resistance 600,000 times | Visual evaluation | A | Diameter 10 mm | Split | Good | Good | Good | Good | Good | Good | Good | Good |
| | | | | Whitening | Good | Good | Fair | Fair | Good | Fair | Good | Good |
| | | | | Bending marks | Good | Fair | Fair | Fair | Good | Fair | Good | Good |
| | | B | Diameter 3 mm | Split | Good | Good | Fair | Fair | Good | Fair | Good | Good |
| | | | | Whitening | Good | Fair | Fair | Fair | Fair | Poor | Good | Good |
| | | | | Bending marks | Good | Fair | Poor | Fair | Fair | Poor | Good | Good |
| | | C | Diameter 2 mm | Split | Good | Good | - | - | Poor | Poor | Good | Good |
| | | | | Whitening | Good | Fair | - | - | Poor | Poor | Good | Good |
| | | | | Bending marks | Fair | Poor | - | - | Poor | Poor | Good | Good |
| | Edge tear resistance | No bend test | | Measured value (N) | 250 | 465 | 398 | 421 | 227 | 423 | 178 | 318 |
| | | A | Diameter 10 mm | Measured value (N) | 187 | 335 | 278 | 272 | 182 | 300 | 162 | 270 |
| | | | | Retention rate (%) | 75 | 72 | 70 | 67 | 80 | 71 | 91 | 85 |
| | | B | Diameter 3 mm | Measured value (N) | 167 | 302 | 159 | 142 | 124 | 110 | 155 | 270 |
| | | | | Retention rate (%) | 67 | 65 | 40 | 35 | 55 | 26 | 87 | 85 |
| | | C | Diameter 2 mm | Measured value (N) | 120 | 214 | - | - | - | - | 151 | 258 |
| | | | | Retention rate (%) | 48 | 46 | - | - | - | - | 85 | 81 |
| Impact resistance | | Impact strength | | (J) | 2.8 | >3.0 | 2.3 | 2.7 | 1.4 | 2.4 | 1.1 | 1.5 |
| | | | | Evaluation | Good | Good | Good | Good | Poor | Good | Poor | Fair |
| Transparency | | Haze (%) | | | 3.9 | 1.5 | 1.6 | 1.0 | 3.0 | 0.4 | 0.5 | 0.6 |
| Heat resistance | | Glass transition temperature (°C) | | | 300/-30 | 333/-30 | 75/120 | 150/120 | 300 | 333 | 120 | 120 |
| | | Reflow heat resistance | | 260°C x 10 sec | Poor | Poor | Poor | Poor | Good | Good | Good | Good |

[Table 3]

| | | | | Comparative Example | | | | | | | |
|---|---|---|---|---|---|---|---|---|---|---|---|
| | | | | 9 | 10 | 11 | 12 | 13 | 14 | 15 | 16 |
| Laminate | Composition | | Layer I | - | - | - | - | - | - | PET (50) | PC (50) |
| | | | Layer II | PA9T-2 (25) | PA9T-2 (50) | PA10T (25) | PA10N (25) | PA6 (25) | TPU (25) | - | - |
| | Total thickness (μm) | | | 25 | 50 | 25 | 25 | 25 | 25 | 50 | 50 |
| Puncture property | Puncture force (N) | | | 14 | 36 | 37 | 42 | 18 | - | 28 | 30 |
| | Puncture strength (N/μm) | | | 0.57 | 0.72 | 1.48 | 1.68 | 0.73 | - | 0.55 | 0.6 |
| | Evaluation | | | Poor | Good | Good | Good | Good | - | Poor | Good |
| Bending resistance 600,000 times | Visual evaluation | A | Diameter 10 mm Split | Good | Good | Good | Good | Good | Good | - | - |
| | | | Whitening | Good | Good | Good | Good | Good | Good | - | - |
| | | | Bending marks | Good | Good | Good | Good | Good | Good | - | - |
| | | B | Diameter 3 mm Split | Good | Good | Good | Good | Good | Good | - | - |
| | | | Whitening | Good | Good | Fair | Fair | Good | Good | - | - |
| | | | Bending marks | Good | Good | Fair | Fair | Good | Good | - | - |
| | | C | Diameter 2 mm Split | Good | Good | Fair | Fair | Good | Good | - | - |
| | | | Whitening | Good | Good | Fair | Fair | Good | Good | - | - |
| | | | Bending marks | Good | Fair | Fair | Fair | Good | Good | - | - |
| | Edge tear resistance | No bend test | Measured value (N) | 180 | 321 | 181 | 192 | 216 | 0 | 208 | 222 |
| | | A | Diameter 10 mm Measured value (N) | 166 | 276 | 148 | 163 | 192 | 0 | - | - |
| | | | Retention rate (%) | 92 | 86 | 82 | 85 | 89 | - | - | - |
| | | B | Diameter 3 mm Measured value (N) | 158 | 263 | 145 | 150 | 194 | 0 | - | - |
| | | | Retention rate (%) | 88 | 82 | 80 | 78 | 90 | - | - | - |
| | | C | Diameter 2 mm Measured value (N) | 153 | 266 | 141 | 154 | 194 | 0 | - | - |
| | | | Retention rate (%) | 85 | 83 | 78 | 80 | 90 | - | - | - |
| Impact resistance | Impact strength | | (J) | 1.1 | 1.6 | 1.3 | 1.2 | 2.0 | 1.0 | 1.4 | 1.5 |
| | | | Evaluation | Poor | Fair | Poor | Poor | Good | Poor | Poor | Fair |
| Transparency | Haze (%) | | | 3.0 | 5.0 | 0.6 | 0.7 | 1.2 | 1.3 | 1.3 | 0.6 |
| Heat resistance | Glass transition temperature (°C) | | | 120 | 120 | 125 | 131 | 58 | −30 | 75 | 150 |
| | Reflow heat resistance | | 260°C x 10 sec | Good | Good | Good | Good | Poor | Poor | Poor | Poor |

The laminates obtained in Examples 1 to 10 had the composition including the layer consisting of the polyimide resin and the layer consisting of the polyamide resin and thus had good puncture resistance and bending resistance. On the other hand, the puncture resistance and bending resistance were not simultaneously satisfied in both the laminates of Comparative Examples 1 and 2 because of not containing the layer consisting of the polyamide resin and the laminates of Comparative Examples 3 and 4 because of not containing the layer consisting of the polyimide resin.

## Claims

1. A laminate comprising one or more layers of a layer consisting of a polyimide resin and a layer consisting of a polyamide resin, respectively, wherein

   a puncture strength is 0.60 N/μm or more, and
   a retention rate of edge tear resistance measured at a bent portion after a bend test is 70% or more,
   wherein the <bend test> is in accordance with JIS K5600-5-1, in which 180°-bending is repeated 600,000 times using a 10 mm-diameter cylindrical mandrel under environment of 20°C x 65% RH.

2. The laminate according to claim 1, wherein an impact strength is 2.0 J or more.

3. The laminate according to one of claim 1 and 2, wherein the polyamide resin is a semi-aromatic polyamide resin.

4. The laminate according to any one of claims 1 to 3, wherein a haze value measured in accordance with JIS K7105 is 8% or less.

5. An image display using the laminate according to any one of claims 1 to 4.

**INTERNATIONAL SEARCH REPORT**

International application No. PCT/JP2019/050780

A. CLASSIFICATION OF SUBJECT MATTER
Int.Cl. B32B27/34(2006.01)i
FI: B32B27/34

According to International Patent Classification (IPC) or to both national classification and IPC

B. FIELDS SEARCHED

Minimum documentation searched (classification system followed by classification symbols)
Int.Cl. B32B1/00-43/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2018/052104 A1 (UNITIKA LTD.) 22.03.2018 (2018-03-22), claims, example 1, paragraphs [0129], [0130], table 2 | 1-5 |
| A | WO 2018/043627 A1 (DAI NIPPON PRINTING CO., LTD.) 08.03.2018 (2018-03-08), claims | 1-5 |
| P, A | JP 2019-51644 A (UNITIKA LTD.) 04.04.2019 (2019-04-04), claims | 1-5 |

☐ Further documents are listed in the continuation of Box C.

☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 19.02.2020 | 03.03.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2019/050780

| | | |
|---|---|---|
| WO 2018/052104 A1 | 22.03.2018 | JP 2018-118515 A<br>CN 109689827 A<br>KR 10-2019-0051988 A<br>TW 201813818 A |
| WO 2018/043627 A1 | 08.03.2018 | US 2019/0315105 A1<br>claims<br>KR 10-2019-0042637 A<br>CN 109844847 A<br>TW 201812341 A |
| JP 2019-51644 A | 04.04.2019 | (Family: none) |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019508280 W